Europäisches Patentamt

European Patent Office

Office européen des brevets

(19)

(11) Numéro de publication: **0 169 758**
**B1**

(12) **FASCICULE DE BREVET EUROPEEN**

(45) Date de publication du fascicule du brevet: **18.01.89**

(51) Int. Cl.⁴: **G 01 S 7/48,** G 01 S 17/42

(21) Numéro de dépôt: **85401244.0**

(22) Date de dépôt: **21.06.85**

(54) Procédé et dispositif de repérage spatial d'un objet et application en simulation de tir.

(30) Priorité: **09.07.84 FR 8410875**

(43) Date de publication de la demande:
**29.01.86 Bulletin 86/05**

(45) Mention de la délivrance du brevet:
**18.01.89 Bulletin 89/03**

(84) Etats contractants désignés:
**BE CH DE GB IT LI SE**

(56) Documents cités:
**FR-A-2 121 433**
**FR-A-2 415 287**
**FR-A-2 477 695**
**FR-A-2 507 764**
**GB-A-2 087 188**
**US-A-3 514 608**
**US-A-4 174 177**

(73) Titulaire: **GIRAVIONS DORAND, Société dite:**
**5 rue Jean Macé**
**F-92150 Suresnes (FR)**

(72) Inventeur: **Goujon, Michel**
**6 rue du Chapitre**
**F-78570 Chanteloup Les Vignes (FR)**
Inventeur: **Legay, Jean-François**
**8 rue de Versailles**
**F-78330 Le Mesnil Saint Denis (FR)**

(74) Mandataire: **Thibon-Littaye, Annick**
**Cabinet A. THIBON-LITTAYE 11 rue de l'Etang**
**F-78160 Marly-le-Roi (FR)**

Courier Press, Leamington Spa, England.

**Description**

L'invention concerne les techniques de repérage d'un objet cible qui font appel à l'emploi d'un rayonnement qui est émis en direction de l'objet et détecté au retour après réflection sur celui-ci. Les plus grandes précisions sont actuellement obtenues avec les rayonnements type laser. Un tel repérage peut être utile, suivant les cas, soit pour mesurer l'éloignement de l'objet d'après le temps que met le rayonnement à parcourir la distance de la source émettrice à l'objet et de l'objet au système de détection, soit pour déterminer la position angulaire de l'objet par rapport à une direction de référence, soit encore pour commander diverses fonctions liées à la présence d'un tel objet dans le champ d'observation dans un appareillage plus complexe.

Pour expliciter ces possibilités, on peut se référer plus spécialement aux applications qui en sont faites dans la simulation de tir, pour apprécier si l'objet repéré, constituant la cible, aurait ou non été atteint par un tir réel répondant aux mêmes caractéristiques que le tir simulé. Dans ce contexte, il est courant d'utiliser un rayonnement laser pour repérer la cible en position angulaire par rapport à un axe de référence et, éventuellement, pour déterminer sa distance. Il est connu également d'imprimer au faisceau laser détecteur, un mouvement de balayage de faible amplitude qui le maintient rivé en direction de la cible au cours des déplacements de cette dernière.

Par exemple le brevet FR-A-2 477 695 déposé également au nom de la présente demanderesse, décrit un procédé et un appareillage de commande de tir sur cible réelle. Un tel dispositif conduit à utiliser le rayonnement laser non pas pour réaliser la simulation même d'un tir fictif, mais pour fournir à chaque instant, y compris pendant la durée du tir, réel ou simulé, du départ du coup à l'impact éventuel, des informations de cible traduisant non seulement sa position en site et azimut (écartométrie) mais aussi sa distance à l'arme (télémétrie). On obtient ces informations de cible en opérant un balayage du champ par le rayonnement laser jusqu'à sa détection après réflexion sur la cible et en réalisant ensuite un suivi de la cible en maintenant l'orientation du rayonnement axée sur la cible dans tous ces déplacements.

L'invention vise essentiellement à perfectionner ces techniques par une meilleure exploitation des renseignements que peut apporter un faisceau de rayonnement utilisé dans le repérage spatial d'un objet, avec plus particulièrement toute la précision dont est capable le laser. Dans ce but, elle propose de faire varier la sensibilité de la détection en fonction de la distance de l'objet détecté, de manière à compenser l'incidence de cette distance sur l'étendue angulaire de la plage sur laquelle la présence de l'objet est recherchée.

L'invention a ainsi pour objet un procédé de repérage spatial d'un objet utilisant l'émission d'un faisceau de rayonnement soumis à un mouvement de balayage autour de l'objet et la réception et la détection d'un signal d'écho réfléchi par l'objet, le mouvement de balayage étant inversé lorsque l'objet n'est plus détecté, caractérisé en ce que le signal d'écho est soumis à un traitement de compensation de sensibilité de réception en fonction de la distance et en ce que l'inversion du balayage est commandée par le signal de détection compensé.

Un tel traitement peut notamment consister à obtenir le signal de détection compensé par comparaison du signal d'écho à un seuil minimum variable de manière prédéterminée, en fonction du temps de parcours du rayonnement s'écoulant entre l'émission du faisceau et la détection de l'écho, lequel traduit, comme il est bien connu, la distance séparant l'objet détecté de l'appareillage d'émission et de détection. Une solution voisine consiste à obtenir le signal compensé par comparaison du signal d'écho à un seuil minimum constant en lui faisant subir auparavant un gain variable de manière prédéterminée en fonction du temps de parcours.

L'utilité de la compensation assurée selon l'invention est susceptible de se faire sentir dans de nombreuses circonstances. En particulier, dans le cas déjà évoqué de la simulation de tir, le signal ainsi compensé peut être avantageusement utilisé pour commander un mouvement de balayage du faisceau propre à maintenir la direction de celui-ci en situation de détection de la cible constituant l'objet. L'étendue du balayage peut alors être maintenue réduite, même pour des cibles rapprochées. En effet, on comprend que dans ce cas, on n'a pas intérêt à balayer le champ d'observation sous un angle qui, pour une sensibilité de détection non compensée, serait d'autant plus ouvert que la cible serait plus proche, alors que parallèlement, la précision dans la détermination de la position angulaire de la cible s'en trouverait diminuée. On peut d'ailleurs établir les lois de compensation par variation du seuil ou du gain, en fonction de la distance (ou du temps de parcours du rayonnement entre émission, cible et détection) de sorte que l'ouverture angulaire du balayage soit sensiblement constante pour toute distance d'éloignement de la cible.

Mais naturellement, l'invention s'étend à toutes les applications du procédé de repérage défini ci-dessus. Elle s'étend aussi aux dispositifs comportant tous moyens propres à la mise en oeuvre de ce procédé.

On décrira maintenant plus en détails une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels:

- La figure 1 représente schématiquement un organigramme des différentes étapes du procédé décrit,

- La figure 2 représente des indicatrices de détection, pour des objets cibles à différentes distances, et elle servira à expliquer l'utilité du procédé de détection selon l'invention dans le cadre de la simulation de tir.

Il est classique, dans les simulateurs de tir, d'utiliser une détection par faisceau laser pour localiser une cible, aussi bien en position angulaire par rapport au simulateur, qu'en distance de celui-ci, et d'exploiter les résultats de ce repérage de la cible pour effectuer une comparaison avec la trajectoire d'un projectile ou missile simulé qui permet d'apprécier si le tir correspondant est correct, c'est-à-dire si un tir réel, répondant aux mêmes caractéristiques, aurait ou non atteint la cible. Le document FR-A-2 477 695 décrit en détail un tel système de simulation de tir. Il expose, en outre, comment on assure un suivi permanent de la cible une fois détectée, en soumettant le même faisceau laser, à un mouvement de balayage de faible amplitude, au voisinage de la cible. En fait, l'on assure la commande du balayage de sorte que l'on provoque un retour en arrière du mouvement, chaque fois que le faisceau ne détecte plus la présence de la cible.

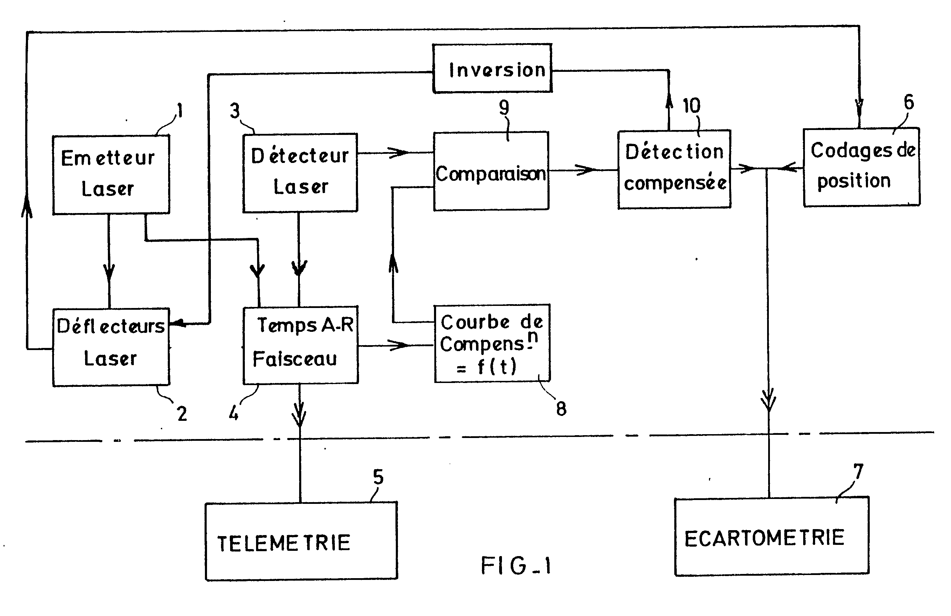

Comme le montre la figure 1, l'appareillage essentiel comprend une source laser 1, des déflecteurs 2 qui permettent d'imposer, à la direction d'émission du faisceau laser, un mouvement de balayage selon deux axes perpendiculaires, et un détecteur laser 3, sensible à l'écho qui est reçu en retour après réflexion sur la cible, lorsque la direction du faisceau laser est convenablement orientée.

Le problème auquel l'invention apporte une solution, concerne la variation de la réponse du détecteur laser, suivant que la cible que l'on détecte est plus ou moins proche, ou plus ou moins éloignée. Cet éloignement de la cible est exprimé d'une manière en elle-même classique par le temps que met le rayonnement laser à parcourir, aller et retour, la distance qui va de la source d'émission à la cible, et de celleci en retour à l'appareil de détection. Ce temps de parcours est détecté, en 4 sur la figure 1, sous forme d'un signal de temps qui est ensuite transmis à un télémètre 5, lequel le convertit pour traduire les résultats directement en valeurs de distance.

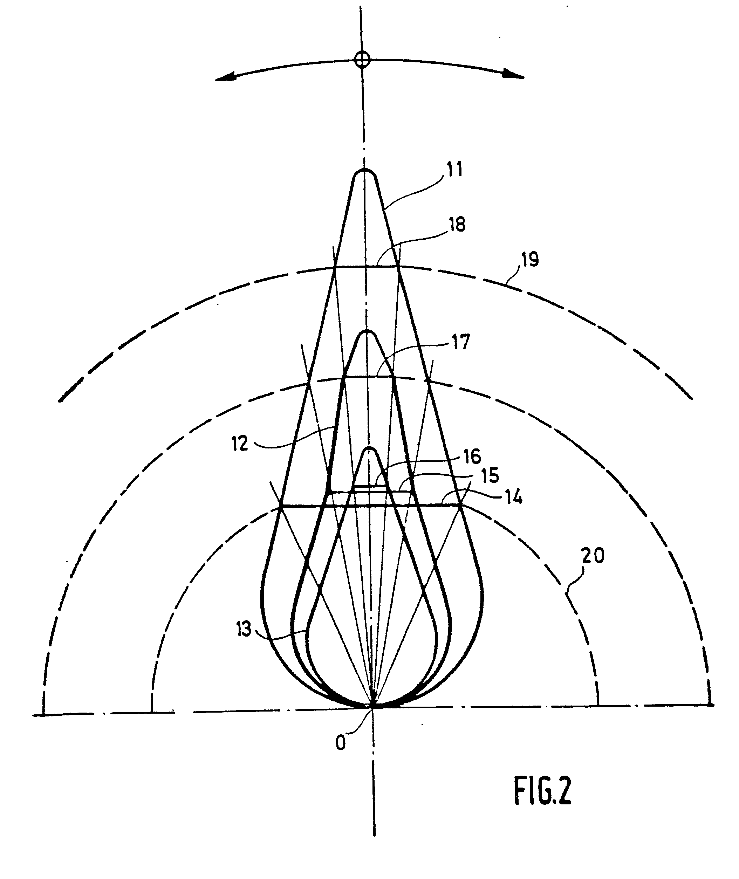

On a coutume de représenter les variations de la sensibilité de la détection, en fonction de la distance de la cible, par ce que l'on appelle des indicatrices de détection, courbes qui traduisent par des lobes de sensibilité renflée, l'étendue sur laquelle la détection est possible par un appareil déterminé. En fait, plutôt que de sensibilité à proprement parler, il s'agit de détectibilité, c'est-à-dire de la capacité de l'appareillage à détecter la cible par émission-réception laser. On a ainsi représenté sur la figure 2 trois indicatrices de détection, chacune pour une position de cible déterminée: l'indicatrice 11, la plus allongée, est pour la cible à faible distance; l'indicatrice la plus ramassée 13 est pour la cible à grande distance; et l'indicatrice intermédiaire 12 correspond à une position de cible à distance moyenne. Les écarts angulaires, ceux de la cible ou ceux du faisceau laser, s'expriment par des débattements de part et d'autre de l'axe des indicatrices, tandis que l'intensité de la réponse à la détection est portée selon cet axe.

En revenant maintenant à la figure 1, on voit que les déflecteurs 2 qui assurent le balayage du faisceau laser transmettent un signal à un dispositif de codage 6, qui élabore une information codée de position, caractérisant la position du faisceau laser, en site et azimuth, à chaque instant. Dans des simulateurs classiques, cette information est transmise à un dispositif d'écartométrie 7, en réponse à un signal de détection d'écho traduisant la réception simultanée d'un écho par le détecteur laser 3. Le dispositif d'écartométrie 7 indique ainsi la position angulaire de la cible. La détection de l'écho est exploitée pour assurer un suivi permanent de la cible par le faisceau laser, un dispositif complémentaire, d'inversion, commande le retour du mouvement de balayage dès que le détecteur 3 ne reçoit plus l'écho, grâce à un asservissement de la commande des déflecteurs au même signal de détection d'écho que ci-dessus. C'est ce signal de détection d'écho que l'invention prévoit de corriger au préalable comme il sera explicité ci-après.

L'étendue ou ouverture angulaire du mouvement de balayage s'exprime sur la figure 2, par les débattements du faisceau autour de l'origine 0, point d'émission du faisceau. Entre les orientations extrêmes où l'écho reste reçu, les largeurs vues des indicatrices de détection sont représentées par les segments 14, 15 et 16, respectivement pour les trois indicatrices à faible, moyenne et grande distance, ceci pour un simulateur classique. La précision dans la détection de la position angulaire de la cible apparaît éminemment variable suivant la distance de cette cible et la qualité de la visée ne peut être jugée dans le cas de cibles rapprochées.

Pour éviter ces inconvénients, l'invention permet de reporter la largeur vue de chaque indicatrice vers son extrêmité. A cet effet, on soumet le signal de détection d'écho à un traitement de correction qui, en 10 sur la figure 1, compense, au moins en partie, les variations de la détectibilité ou sensibilité de la détection, en fonction de la distance de la cible. On peut même parvenir, par un étalonnage approprié de la loi de correction, à faire en sorte que les largeurs vues des indicatrices se situent en 16, 17, 18, ce qui correspond à un angle d'ouverture du balayage restant constant lorsque la cible devient de plus en plus proche du simulateur.

Ceci s'obtient en imposant au signal de détection de l'écho laser un seuil d'amplitude minimal qui varie suivant la distance de la cible, ou plus exactement suivant le temps de parcours du rayon laser détecté en 4. Ce seuil est relativement élevé pour un temps de parcours bref (courbe 19 sur la figure 2) et relativement faible pour des temps de parcours longs (courbe 20). La loi gouvernant les variations du seuil en fonction du temps de parcours est établie par étalonnage préalable, et enregistrée en 8 (figure 1).

Le signal traduisant le temps de parcours, fourni en 4, est transmis en 8 pour sélection du seuil correspondant. En 9, le signal de détection d'écho provenant du détecteur laser 3 est comparé au signal de seuil provenant de 8 et il n'est transmis par l'intermédiaire du dispositif 10, pour constituer le signal de détection d'écho corrigé utilisé par la suite, que dans la mesure où son amplitude est supérieure au seuil sélectionné.

En variante de ce qui vient d'être décrit, la même correction peut être réalisée en maintenant le seuil minimal imposé au signal de détection d'écho final à une valeur constante relativement faible et en accroissant l'amplitude du signal initial issu du détecteur laser 3 d'un gain dont la valeur varie suivant le temps de parcours détecté pour le rayon laser. La loi de variation du gain en fonction du temps, imposée par un dispositif analogue au dispositif 8 de la figure 1, correspond alors à une augmentation du gain avec le temps, donc la distance de la cible.

On comprend que cette variante, comme la solution précédente, conduit à ce qu'un signal de détection d'écho corrigé est obtenu pour les orientations du faisceau situées dans une ouverture angulaire qui reste sensiblement constante pour toutes distances de cible dans une gamme prédéterminée.

## Revendications

1. Procédé de repérage spatial d'un objet utilisant l'émission d'un faisceau de rayonnement soumis à un mouvement de balayage autour de l'objet et la réception et la détection d'un signal d'écho réfléchi par l'objet, le mouvement de balayage étant inversé lorsque l'objet n'est plus détecté, caractérisé en ce que le signal d'écho est soumis à un traitement de compensation de sensibilité de réception en fonction de la distance et en ce que l'inversion du balayage est commandée par le signal de détection compensé.

2. Procédé selon la revendication 1, caractérisé en ce que le signal de détection compensé est obtenu par comparaison du signal d'écho à un seuil minimum variable de manière prédéterminée en fonction du temps de parcours du rayonnement s'écoulant entre l'émission du faisceau et la détection de l'écho.

3. Procédé selon la revendication 1, caractérisé en ce que le signal de détection compensé est obtenu par comparaison du signal d'écho à un seuil minimum constant en lui faisant subir auparavant un gain variable de manière prédéterminée en fonction du temps de parcours du rayonnement s'écoulant entre l'émission du faisceau et la détection de l'écho.

4. Procédé selon la revendication 2 ou 3, caractérisé en ce que la loi de compensation par variation du seuil ou du gain est déterminée par étalonnage de sorte que l'on obtient un signal de détection compensé pour les orientations du faisceau situées dans une ouverture angulaire qui reste sensiblement constante pour toutes distances dudit objet dans une gamme prédéterminée.

5. Procédé selon l'une quelconque des revendications 1 à 4, caractérisé en ce que ledit rayonnement est de type laser.

6. Dispositif de repérage spatial d'un objet, comportant un émetteur (1) d'un faisceau de rayonnement soumis à un mouvement de balayage autour de l'objet, des moyens de réception et de détection (3) d'un signal d'écho renvoyé par l'objet, un moyen de détermination (4, 5) de la distance de l'objet à partir du temps de parcours du rayonnement, des moyens de commande d'inversion du mouvement de balayage lorsque l'objet n'est plus détecté, caractérisé en ce que les moyens de réception et de détection (3) comportent un moyen de compensation (10) de sensibilité de réception en fonction de la distance de l'objet suivant une loi prédéterminée et en ce que le signal d'écho compensé issu dudit moyen est appliqué au moyen de commande d'inversion de balayage.

7. Dispositif selon la revendication 6, caractérisé en ce qu'il comporte des moyens de calcul de la distance de l'objet à partir dudit temps de parcours entre l'émission du faisceau et la réception de l'écho.

8. Dispositif selon la revendication 6 ou 7, caractérisé en ce qu'il comporte des moyens de détection de l'orientation du faisceau commandés à partir dudit moyen de compensation.

9. Simulateur de tir comportant application du procédé ou dispositif selon l'une quelconque des revendications 1 à 8 pour repérer la position d'une cible constituant ledit objet.

## Patentansprüche

1. Verfahren zum räumlichen Orten eines Objekts unter Verwendung eines einer Kreiselbewegung um das Objekt herum unterworfenen Strahlenbündels und des Empfangs sowie der Erfassung eines durch das Objekt ausgesendeten Echosignals, wobei die Kreiselbewegung umgekehrt verläuft, wenn das Objekt nicht mehr erfaßt wird, dadurch gekennzeichnet, daß das Echosignal einer Behandlung zum Kompensieren der Empfangsempfindlichkeit als Funktion der Entfernung unterworfen wird und daß die Umkehrung der Kreiselbewegung durch das kompensierte Empfangssignal gesteuert wird.

2. Verfahren nach Anspruch 1, dadurch gekennzeichnet, daß das kompensierte Empfangssignal durch Vergleich des Echosignals mit einer variablen Minimalschwelle in vorher festgelegter Weise in Abhängigkeit von der Laufzeit zwischen Aussendung des Strahlenbündels und Erfassung des Echos erhalten wird.

3. Verfahren nach Anspruch 1, dadurch gekennzeichnet, daß das kompensierte Empfangssignal durch Vergleich des Echosignals mit einer konstanten Mininmalschwelle erhalten wird, wobei es vorher in vorbestimmter Weise in Abhängigkeit von der Laufzeit zwischen Aussendung des Strahlenbündels und der Erfassung des Echos einer Verstärkung unterworfen wird.

4. Verfahren nach Anspruch 2 oder 3, dadurch gekennzeichnet, daß die Kompensationsregel mit Variation der Schwelle oder der Verstärkung durch Eichen derart festgelegt wird, daß man ein kompensiertes Empfangssignal erhält für die in einer für alle Entfernungen des genannten Objekts nahezu konstanten Winkelöffnung liegenden Richtungen des Strahlenbündels innerhalb einer vorbestimmten Skala.

5. Verfahren nach einem der Ansprüche 1 bis 4, dadurch gekennzeichnet, daß eine Laserstrahlung verwendet wird.

6. Vorrichtung zum räumlichen Feststellen eines Objekts mit einem Sender (1) eines einer Kreiselbewegung um das Objekt herum unterworfenen Strahlenbündels, mit Mitteln (3) zum Empfang und zum Erfassen eines durch das Objekt zurückgeworfenen Echosignals, mit Mitteln (4, 5) zum Bestimmen der Entfernung des Objekts mit Hilfe der Laufzeit der Strahlung und mit Mitteln zum Steuern der Unkehrung der Kreiselbewegung, wenn das Objekt nicht mehr erfaßt wird, dadurch gekennzeichnet, daß die Mittel (3) zum Empfang und zum Erfassen ein Mittel (10) zum Kompensieren der Empfangsempfindlichkeit in Abhängigkeit von der Entfernung des Objekts nach einer vorbestimmten Regel umfassen und daß das aus dem genannten Mittel erhaltene kompensierte Echosignal auf die Mittel zum Steuern der Umkehrung der Kreiselbewegung geschaltet wird.

7. Vorrichtung nach Anspruch 6, dadurch gekennzeichnet, daß sie Mittel zum Berechnen der Entfernung des Objekts ausgehend von der Laufzeit zwischen Aussendung des Strahlenbündels und Empfang des Echos enthält.

8. Vorrichtung nach Anspruch 6 oder 7, dadurch gekennzeichnet, daß sie von den genannten Mitteln zum Kompensieren gesteuerte Mittel zum Feststellen der Richtung des Strahlenbündels enthält.

9. Schußsimulator unter Anwendung des Verfahrens oder der Vorrichtung nach einem der Ansprüche 1 bis 8 zum Orten der Position eines das genannte Objekt bildenden Ziels.

## Claims

1. A method of locating an object in space in which a beam of radiation is emitted and subjected to a sweeping movement around the object, and in which an echo signal reflected by the object is received and detected, the sweeping movement being reversed when the object is no longer detected, the said method being characterised in that the echo signal is subjected to treatment to compensate for variations in the sensitivity of reception as a function of distance, and in that the reversal of the sweeping movement is controlled by the compensated detection signal.

2. A method according to Claim 1, characterised in that the compensated detection signal is obtained by comparison of the echo signal with a minimum threshold value which is variable in a predetermined manner as a function of the time of travel of the radiation elapsing between emission of the beam and detection of the echo.

3. A method according to Claim 1, characterised in that the compensated detection signal is obtained by comparison of the echo signal with a constant minimum threshold value by causing it to undergo a variable gain, in a predetermined manner, beforehand, as a function of the time of travel of the radiation elapsing between the emission of the beam and the detection of the echo.

4. A method according to either one of Claims 2 and 3, characterised in that the law governing the compensation by variation of the said threshold or gain is determined by calibration in such a way that a detection signal is obtained which is compensated for the orientations of the beam situated in an angular opening which remains substantially constant for all distances of the said object within a predetermined range.

5. A method according to any one of Claims 1 to 4, characterised in that the said radiation is of the laser type.

6. Apparatus for locating an object in space, comprising an emitter (1) for a beam of radiation subjected to a sweeping movement around the object, receiving and detecting means (3) for an echo signal reflected by the object, means (4, 5) for computing the distance of the object from the time of travel of the radiation, and control means for reversing the sweeping movement when the object is no longer detected, characterised in that the receiving and detecting means (3) include compensating means (10) for the sensitivity of reception as a function of the distance of the object according to a predetermined law, and in that the compensated echo signal issued from the said means is applied to the control means for reversal of the sweeping movement.

7. Apparatus according to Claim 6, characterised in that it includes means for computing the distance of the object from the said time of travel between the emission of the beam and the reception of the echo.

8. Apparatus according to Claim 6 or Claim 7, characterized in that it includes means for detecting the orientation of the beam controlled from the said compensating means.

9. An aiming simulator including means for employing the method, or including apparatus, according to any one of Claims 1 to 8, for detecting the position of a target constituting the said object.

FIG_1

EP 0 169 758 B1

FIG.2